# EUROPEAN PATENT APPLICATION

(11) **EP 4 282 820 A1**
(43) Date of publication of application: **29.11.2023**
(21) Application number: 22305778.7
(22) Date of filing: 25.05.2022
(51) Int. Cl.: C01B 32/20, C01B 32/21, H01M 4/133, H01M 4/1393, H01M 4/583, H01M 10/052, H01M 4/36

(54) **GRAPHITE MATERIALS AND PROCESSES FOR THEIR PRODUCTION AND USE**

(71) Applicant: IMERTECH SAS, 75015 Paris (FR)
(72) Inventor: GULÁ , Michal, CH-6713 Malvaglia (CH); MORNAGHINI, Flavio, CH-6616 Losone (CH); OSTINELLI, Luca, I-22040 Alzate Brianza (IT); ZÜRCHER, Simone, CH-6945 Origlio (CH)
(74) Representative: Haseltine Lake Kempner LLP

(57) **Abstract**

The present invention is directed to graphite materials having a pH of at least 5.4, a Scott density of less than or equal to 0.11 g/cm³, and a Raman D/G intensity ratio of 0.220 to 0.420. The present invention further relates to applications of these graphite materials as well as processes for their production. In particular, the graphite materials of the present invention allow for an advantageous balance of low oxidability and low electrical resistance. This combination of properties is particularly advantageous when using the graphite materials as conductive additives in electrodes.

## Description

### Field of the invention

The present invention is directed to graphite materials having an advantageous balance between low oxidability and low electrical resistance, to processes for producing such graphite materials and to applications for said graphite materials.

### State of the art

Carbon conductive additives are used in a variety of primary and secondary batteries like alkaline zinc/manganese dioxide batteries, zinc carbon batteries, lithium primary and rechargeable batteries, nickel cadmium batteries, lead acid batteries, and nickel metal hydride batteries, lithium sulfur batteries, lithium air batteries, metal air batteries with metals like zinc or iron, fuel cells as well as capacitor systems.

Conductive additives are applied in electrodes of electrochemical cells to decrease the electrical electrode resistance. Carbonaceous powdered materials are often selected as conductive additives due to their light weight and inertness towards acidic and alkaline electrolytes. Conductive additives generally do not contribute to the electrochemical processes of the electrode, which means that for a high energy density of the cell, the applied quantity of conductive additive is desirably minimized. Typical carbon conductive additives used are fine graphite powders and conductive carbon black (see for example, M.E. Spahr, Lithium-ion Batteries-Science and Technology, M. Yoshio, R.J. Brodd, A. Kozawa (Eds.), Springer, New York, 2009, Chapter 5).

Graphite is the most common allotrope of carbon and is characterized by good electrical, thermal, and lubricating properties. Graphite is widely used as conductive additive in the above mentioned battery and fuel cell applications due to its good electrical conductivity, low density and a generally excellent chemical inertness.

Lithium ion batteries are used for consumer and industrial purposes. A lithium ion battery is usually constituted of a positive electrode, a negative electrode, an electrolyte, and a separator. A negative electrode active material to be used is natural or synthetic graphite. Materials such as lithium cobaltate (LiCoO₂), manganese spinel (LiMn₂O₄), and the like are mainly used as active material for the positive electrode. Since the positive electrode active material has a high electric resistance, the electric resistance of the positive electrode is decreased by using carbon-based conductive additives.

Lead acid batteries are used for consumer and industrial purposes. A lead acid battery is usually constituted of a positive electrode, a negative electrode, an electrolyte, and a separator. The addition of a small amount of conductive carbon to the negative electrode of a lead acid battery leads to an improvement of the cycle life and charge acceptance when the battery works in high-rate partial state-of-charge (HRPSoC) mode as for example applied in the use of hybrid electric vehicles (see for example, K. Nakamura, M. Shiomi, K. Takahashi, M. Tsubota, Journal of Power Sources 59 (1996) 153, M. Shiomi, T. Funato, K. Nakamura, K. Takahashi, M. Tsubota, Journal of Power Sources, 64 (1997), 147 and D. Pavlov, P. Nikolov, T. Rogachev, Journal of Power Sources 196 (2011), 5155-5167.

Alkaline batteries are used for consumer and industrial purposes. In general, a primary alkaline cell includes an anode, a cathode, an electrolyte permeable separator between the anode and the cathode, and an alkaline electrolyte, generally consisting of an aqueous solution of potassium hydroxide, contacting both the anode and the cathode. The cathode active material comprises manganese dioxide or nickel oxyhydroxide or mixtures thereof and an electrically-conductive additive, such as graphite, to increase electrical conductivity of the cathode. The cathode material in alkaline battery is Manganese dioxide (EMD electrolytic manganese dioxide).

Fuel cells are used for industrial purposes. A fuel cell is usually constituted of a membrane, catalyst layer, gas diffusion layer, microporous layer and bipolar plates. Bipolar plates are typically produced by molding highly conductive graphite-polymer compounds. The graphite must have high electrical conductivity and also be resistant to oxidation (especially in the cathode where oxygen gas is in direct contact with the bipolar plates). Also the gas diffusion layer and microporous layer are in direct contact with oxygen and must be electrically conductive. The use of a highly conductive graphite with high resistance to oxidation can improve the performance of the fuel cell system.

One of the drawbacks of the use of graphite materials as conductive additives is their limited stability towards oxidative environments, especially under harsh conditions as found in electrochemical systems. When used as conductive additive, the oxidation of the graphite material surface may result in a lower electrical conductivity of the powder. Furthermore, the loss of graphite during oxidation will cause a loss of functionality of the system. Moreover, further increase in oxidation will result in a significant evolution of gases like CO or CO₂, which may lead to potentially hazardous degradation of the systems in which the graphite is used.

Thus, a low oxidability is an important feature of the graphite material in such applications.

As discussed in US 7,273,680 B2, the oxidation resistance of a particular graphite is believed to be related to the specific surface area of the graphite particles, whereby the smaller the surface area, the more oxidation resistant the graphite. This document teaches that oxidation resistant graphite can be produced by heat-treating high purity synthetic or natural graphite in an inert atmosphere at high temperatures such as greater than 2500°C or greater than 3000°C.

In applications of graphite materials as conductive additives, the electrical resistance of the materials is another very important parameter. The electrical resistance is a material property related to the degree of the material's resistance to electric current. A material with a low resistivity is a material which readily conducts electric current.

### Object of the invention

It is an object of the present invention to provide novel graphite materials having superior properties compared to the graphite materials of the prior art. In particular, the present invention aims to provide a graphite material having an improved balance between low oxidability and low electrical resistance as well as products comprising these graphite materials.

It is another object of the present invention to provide suitable processes for producing such graphite materials.

### Summary of the invention

The present inventors have surprisingly found that by choosing appropriate graphite starting materials and carefully controlling the parameters of the process, it is possible to prepare graphite materials having excellent properties. In particular, the present inventors have surprisingly found that an optimal balance between low oxidability and low electrical resistance can be achieved with a graphite material having a pH of at least 5.4; a Scott density less than or equal to 0.11g/cm³ and a Raman D/G intensity ratio of 0.220 to 0.420 when measured with a laser having excitation wavelength of 632.8 nm.

Further, the present invention also provides for a process for producing a graphite material, wherein a) a graphite starting material is subjected to a surface modification process comprising heating to a temperature in the range of 300 to 1700°C in the presence of an oxidizing process gas such as but not limited to oxygen, air, oxygen enriched air, carbon dioxide, ozone, steam, NOₓ (such as, but not limited to NO₂, NO, N₂O) or any combination thereof; and b) a graphite material described herein is obtained.

The present invention is further directed to a negative or positive electrode for inclusion in a battery comprising the graphite material described herein, preferably as a conductive additive.

The present invention is further directed to a battery comprising the graphite material described herein, wherein the battery is preferably a Lithium ion battery, a lead acid battery, an alkaline battery or a NiCd battery.

The present invention is further directed to a fuel cell comprising the graphite material described herein.

Moreover, the present invention is directed to the use of the graphite material described herein in any one of the following: Lithium ion battery, lead acid battery, alkaline battery, NiCd battery, fuel cell.

The graphite material of the present invention can be advantageously employed in batteries or fuel cells. The use of the graphite materials having a low oxidability and low electrical resistance has the benefit of extending the life of the battery or fuel cell, slowing the degradation of the battery or fuel cell efficiency, and improving safety by reducing the risk of graphite decomposition into gases. In addition, a lower electrical resistance allows for the use of less conductive additive in the battery or fuel cell resulting in higher cell capacity.

### Detailed description of the invention

### Definitions

In context of the present invention, the term "electrical resistance", p, sometimes also referred to as electrical resistivity, volume resistivity or specific electrical resistance, is a material property related to the degree of the material's resistance to electric current expressed in the SI units Ohm·m or Ohm·cm (Ω·m or Ω·cm, respectively).

Volume resistivity can be measured by the following method:
- preparing a mixture containing 95% electrolytic manganese dioxide and 5 wt% graphite (in case a synthetic or natural graphite was used as graphite starting material) or 3 wt% graphite and 97% electrolytic manganese dioxide (in case an expanded graphite was used as graphite starting material);
- pressing 10g of the obtained mixture at 180 Nm in a die with length of 50mm and width of 12mm to obtain a block;
- measuring the height (H) and the width (W) of the block;
- measuring the block electrical resistance (R) with a 4 points probe;
- calculating the resistivity as H*R/D, where D is the distance of probe measurement pins.

A low-resistivity material is a material which readily conducts electric current.

In context of the present invention, the term "oxidability" refers to the material's resistance toward oxidation. It is measured by aging the material in a KOH-water solution measuring the absorbance of the solution. In particular, the oxidability of the graphite material can be measured by the method comprising the following steps:
a) preparing a mixture of 40 wt% graphite material and 60 wt% electrolytic manganese dioxide;
b) pressing the mixture of step a) together and applying a pressure of 6.8 metric tons/cm² for 5 seconds to form a tablet,
c) aging the tablet at 60°C in 20 mL of a solution of 30 wt% KOH in water to obtain an aged solution;
d) filtering the aged solution to obtain a filtered aged solution;
e) measuring the absorbance at 410 nm with an UV-Vis spectrometer; and
f) assessing oxidability of the tested graphite material as the measured absorbance value.

The oxidability is defined as the measured absorbance value. The lower the measured absorbance, the lower is the oxidability and the graphite material's oxidation resistance is higher.

In context of the present invention, the term "conductive additive" refers to materials applied in electrodes of electrochemical cells to decrease the electrical electrode resistance. Carbonaceous powdered materials are often selected as conductive additives due to their light weight and inertness towards acidic and alkaline electrolytes. Conductive additives generally do not contribute to the electrochemical processes of the electrode, which means that for a high energy density of the cell, the applied quantity of conductive additive is desirably minimized. Typical carbon conductive additives used are fine graphite powders and conductive carbon black (see for example, M.E. Spahr, Lithium-ion Batteries-Science and Technology, M. Yoshio, R.J. Brodd, A. Kozawa (Eds.), Springer, New York, 2009, Chapter 5).

The graphite materials of the present invention and their properties are described in more detail below. All explanations apply to the further aspects of the present invention as well, such as the process of the present invention, the positive or negative electrode for inclusion in a battery comprising the graphite material, the battery or fuel cell comprising the graphite material and the use of the graphite material.

### The graphite material

In a first aspect, the present invention provides a graphite material having the following properties:
a) a pH of at least 5.4, measured as described herein;
b) a Scott density less than or equal to 0.11 g/cm³, measured as described herein; and
c) a Raman D/G intensity ratio of 0.220 to 0.420 when measured with a laser having excitation wavelength of 632.8 nm.

The graphite material of the present invention has a pH of at least 5.4, preferably the pH is 5.4 to 12 or 5.4 to 11, or 5.4 to 10. The pH of the graphite material can be measured by dispersing the material in water and measuring the pH using a pH-meter. Any reference to the pH of the graphite material in this specification relates to the pH of the dispersion of the graphite material in water.

Furthermore, the graphite material of the present invention has a Scott density less than or equal to 0.11 g/cm³, preferably less than or equal to 0.10 g/cm³, or less than or equal to 0.09 g/cm³. The Scott density can be 0.001 to 0.11 g/cm³, preferably 0.01 to 0.10 or 0.01 to 0.09 g/cm³. In a preferred embodiment, the Scott density is 0.03 to 0.11 g/cm³, such as 0.03 to 0.10 g/cm³ or 0.03 to 0.09 g/cm³. The Scott density can be measured using a Scott volumeter according to ASTM B 329-98 (2003).

Furthermore, the graphite material of the present invention has a Raman D/G intensity ratio of 0.220 to 0.420, such as 0.230 to 0.420 or 0.220 to 0.400 when measured with a laser having excitation wavelength of 632.8 nm. In a preferred embodiment, the graphite material of the present invention has a Raman D/G intensity ratio of 0.230 to 0.400. The Raman D/G intensity ratio is based on the ratio of intensities of the so called D band and G band. These peaks are characteristic for carbon materials, measured at 1350 cm⁻¹ and 1580 cm⁻¹, respectively.

It will further be understood that the graphite material may be further defined by each ph value range, independently or in addition to each Scott density value range and Raman D/G intensity ratio range (of course provided they are not mutually exclusive).

The graphite material of the present invention may have a pH of 5.4 to 12, a Scott density of 0.001 to 0.11 g/cm³ and a Raman D/G intensity ratio of 0.220 to 0.420.

In a preferred embodiment of the present invention, the graphite material has a pH of 5.4 to 11, a Scott density of 0.03 and 0.11 g/cm³ and a Raman D/G intensity ratio of 0.220 and 0.400.

In a preferred embodiment of the present invention, the graphite material has a pH of 5.4 to 11, a Scott density of 0.03 and 0.10 g/cm³ and a Raman D/G intensity ratio of 0.230 and 0.400.

In a preferred embodiment of the present invention, the graphite material has a pH of 5.4 to 10, a Scott density of 0.03 and 0.09 g/cm³ and a Raman D/G intensity ratio of 0.230 and 0.400.

The graphite material of the present invention is in some embodiments further characterized by a specific Particle Size Distribution. The Particle Size Distribution may be measured using Laser Diffraction. The particle size distribution is typically defined by the values D10, D50 and D90, wherein 10 percent (by volume) of the particle population has a size below the D10 value, 50 percent (by volume) of the particle population has a size below the D50 value and 90 percent (by volume) of the particle population has a size below the D90 value.

The graphite material of the present invention may have a D90 of at least 5 µm or of at least 6 µm, or of at least 7 µm or of at least 11.0 µm, preferably of at least 12 µm or at least 13 µm. The graphite material of the present invention may have a D90 of 11 to 120 µm, or 12 to 120 µm or 13 to 120 µm. In certain embodiments in which a non-expanded graphite material was used as a starting material, a D90 value ranging from 11 to 50 µm, or 11 to 40 µm, or 11 to 30 µm is preferred.

Likewise, the particle size distribution value D50 will in some embodiments range from 1 to 50 µm, although in certain embodiments in which a non-expanded graphite material was used as a starting material, a D50 value ranging from 5 to 20 µm, or from 6 to 15 µm is preferred.

It will further be understood that the graphite material may be further defined by each D90 value range, independently or in addition to the D50 value range (of course provided they are not mutually exclusive).

In some embodiments in which a non-expanded graphite material was used as a starting material, the graphite material has a D90 value of 11 to 50 µm and a D50 value of 5 to 20 µm.

For certain embodiments the graphite material of the present invention is further characterized by an oxygen concentration of at least 0.042 wt%, based on the total weight of the graphite material. In a preferred embodiment, the oxygen concentration is 0.042 to 1.0 wt%, or 0.042 to 0.9 wt%, or 0.042 to 0.7 wt%, or 0.042 to 0.6 wt%, or 0.042 to 0.5 wt%. The oxygen concentration can be measured by measuring the elemental oxygen content of the graphite material by elemental analysis. The oxygen concentration corresponds to the oxygen content of the graphite material.

In a preferred embodiment of the present invention, the graphite material has a D90 of at least 11.0 µm and an oxygen concentration of at least 0.042 wt%, based on the total weight of the graphite material.

In a preferred embodiment of the present invention, the graphite material of the present invention has a D90 of 11 to 120 µm, a D50 of 1 to 50 µm and an oxygen concentration of 0.042 to 1.0 wt%, based on the total weight of the graphite material.

In a preferred embodiment, the graphite material has a pH of 5.4 to 11, a Scott density of 0.03 and 0.11 g/cm³, a Raman D/G intensity ratio of 0.220 to 0.400, a D90 of 12 to 120 µm and an oxygen concentration of 0.042 to 1.0 wt%, based on the total weight of the graphite material.

In a preferred embodiment, the graphite material has a pH of 5.4 to 11, a Scott density of 0.03 to 0.10 g/cm³, a Raman D/G intensity ratio of 0.230 to 0.400, a D90 of 13 to 120 µm and an oxygen concentration of 0.042 to 0.6 wt%, based on the total weight of the graphite material.

In a preferred embodiment, the graphite material has a pH of 5.4 to 10, a Scott density of 0.03 and 0.09 g/cm³, a Raman D/G intensity ratio of 0.230 to 0.400, a D90 of 13 to 120 µm and an oxygen concentration of 0.042 to 0.6 wt%, based on the total weight of the graphite material.

The graphite materials of the present invention may be further characterized by a relatively high BET surface area of at least 5.5 m²/g. The BET surface area can be measured based on the procedure proposed by Brunauer, Emmet and Teller (Adsorption of Gases in Multimolecular Layers, J. Am. Chem. Soc., 1938, 60, 309- SI 9).

The ash content may be less than 0.3 wt%, and preferably less than 0.2 wt%, more preferably less than 0.1 wt%, even more preferably less than 0.08%,, still more preferably less than 0.06 wt%, such as less than 0.05 wt% and most preferably less than 0.04 wt%. The ash content may be measured according to ASTM C561.

The graphite materials of the present invention may have an oxidability less than or equal to 0.19 and an electrical resistance less than or equal to 600 mΩ·cm, preferably less than or equal to 400 mΩ·cm, and most preferably less than or equal to 285 mΩ·cm.

The graphite material preferably may have an oxidability of less than or equal to 0.18 or 0.17 or 0.16 or 0.15.

The oxidability is defined as the measured absorbance value (absorbance intensity ratio) of the method comprising the following steps:
a) preparing a mixture of 40 wt% graphite material and 60 wt% electrolytic manganese dioxide,
b) pressing the mixture of step a) together and applying a pressure of 6.8 metric tons/cm² for 5 seconds to form a tablet,
c) aging the tablet at 60°C in 20 mL of a solution of 30 wt% KOH in water to obtain an aged solution;
d) filtering the aged solution to obtain a filtered aged solution;
e) measuring the absorbance at 410 nm of the filtered aged solution with an UV-Vis spectrometer; and
f) assessing oxidability of the tested graphite material as the measured absorbance value.

Furthermore, the graphite material preferably has an electrical resistance of less than or equal to 260, or less than or equal to 255, or less than or equal to 250 mΩ·cm.

Generally speaking, the graphite materials of the present invention characterized by the parameters given above are obtainable by subjecting a graphite starting material to a process comprising heating to a temperature in the range of 300 to 1700, preferably 500 to 1400, most preferably 700 to 1100°C in the presence of an oxidizing process gas such as but not limited to oxygen, air, oxygen enriched air, carbon dioxide, ozone, steam, NOₓ (including but not limited to NO₂, NO, N₂O) or any combination thereof.

The graphite material of the present invention can be produced by the process described below in detail.

### Process

In a second aspect, the present invention provides for a process of treating a graphite starting material to yield the graphite materials with improved oxidability and electrical resistance of the present invention. In particular, a process is provided for producing a graphite material wherein
a) a graphite starting material is subjected to a surface modification process comprising heating to a temperature in the range of 300 to 1700°C in the presence of an oxidizing process gas such as but not limited to oxygen, air, oxygen enriched air, carbon dioxide, ozone, steam, NOₓ (including but not limited to NO₂, NO, N₂O) or any combination thereof; and
b) the graphite material of the present invention is obtained.

The present inventors have found that graphite material with improved oxidability and electrical resistance can be obtained by carefully selecting the starting material as well as adjusting the main process parameters, such as residence time, oxidizing process gas flow rate and temperature in order to obtain graphite materials characterized by the parameters described herein.

In a preferred embodiment, step a) comprises heating to a temperature in the range of 500 to 1400°C, preferably 700 to 1100°C.

The graphite starting material can be natural graphite, synthetic graphite, expanded graphite or a mixture thereof.

The graphite starting material is not coated with a carbon coating.

Natural graphite is extracted from mines in which the typical content in the ore is between 3 and 10% wt%. The ore is crushed down and the graphite flakes are separated through flotation and centrifugation from the rocks. The obtained graphite has a typical purity between 85 and 96% wt%. In order to obtain higher purity, the graphite can be chemically treated using high concentrated KOH solutions followed by an acid treatment that, depending on the desired final purity, may involve concentrated HCl, H₂SO₄ and HF. The obtained graphite can be further milled down to the desired particle size according to the final application.

Synthetic graphite is manufactured from natural or petroleum carbon precursors in high temperature processes that transform amorphous carbon to carbon of higher structural order. Synthetic graphite are typically produced by thermally treating precursor carbonaceous materials in an Acheson furnace (as described in US patent 933944) in which high current flux is passed through the carbonaceous materials positioned between two electrodes. The material is heated by resistive heating (Joule effect) and thermal conduction at temperatures above 2000°C where the graphitisation occurs. The obtained graphite is further milled down to the desired particle size according to the final application as for the natural graphite.

Expanded graphite is an exfoliated form of graphite. A method of producing expanded graphite is described for example in EP 0981659 B1. The production process is based on the thermal exfoliation of graphite intercalation compounds formed by the treatment of graphite flakes with strong acid in the presence of an oxidizing agent, such as highly concentrated combinations of sulfuric and nitric acid. The intercalated graphite is then subjected to a thermal shock by rapidly heating to temperatures of about 850 to 1000°C which cause the decomposition of the guest anions and acid molecules between the graphite layers to gaseous products that exfoliate the graphite layers. As an alternative, microwave radiations can be used for the exfoliation process. Finally, the graphite is subjected to milling, which further delaminates and separates the expanded graphite.

In a preferred embodiment, the starting graphite material is milled prior to being subjected to the surface modification process.

The starting graphite material may be a mixture of from 10 to 90 wt% natural or synthetic graphite and from 90 to 10 wt% expanded graphite. Increased amounts of expanded graphite will increase the electrical conductivity, however at a corresponding higher cost of material.

The oxidation is achieved by heating the graphite starting material in the presence of an oxidizing process gas such as but not limited to oxygen, air, oxygen enriched air, carbon dioxide, ozone, steam, NOₓ (including but not limited to NO₂, NO, N₂O) or any combination thereof. In a preferred embodiment, the oxidation is achieved by heating the graphite starting material in the presence of an oxidizing process gas comprising at least one of oxygen, CO₂ ozone, steam and/or NOₓ (including but not limited to NO₂, NO, N₂O) for a specified time in a high temperature furnace suitable for powder treatments. The process can be conducted as a continuous process. However, batch processes or semi-continuous processes can be employed as well. Suitable furnaces to be used are for example fixed bed furnaces, fluidised bed furnaces, roller hearth kilns, belt furnaces, rotary kilns, continuous stirred reactors, flash furnace or flash calciner multiple hearth furnaces or their modifications or combinations. The process might be gas fired or electrically heated.

The oxidizing process gas used can be but is not limited to oxygen, air, oxygen enriched air, carbon dioxide, ozone, steam and NOₓ (including but not limited to NO₂, NO, N₂O). It will be understood that the oxidizing process gas can also be any combination of the aforementioned gases, optionally in a mixture with an inert carrier gas such as nitrogen or argon.

In a preferred embodiment, the oxidizing process gas used is air or CO₂.

It will generally be appreciated that the oxidation process is faster with increased oxygen concentration, i.e., a higher partial pressure of oxygen in the oxidizing process gas. The amount of oxidizing process gas depends on the amount of graphite starting material in order to keep a certain ratio of C/O to allow efficiency of the process.

The residence time in step a) required to obtain a graphite material characterized by the specific properties as described herein will depend on the type of the reactor selected, process conditions such as temperature, carbon amount and oxygen amount. In case of batch process, residence time might be adapted to any time needed in order to reach the final properties of the graphite material as described herein. In case of a continuous process (e.g. rotary kiln, roller hearth kilns etc), the process parameters like temperature or carbon throughput might need to be adapted according to maximum possible residence time. For roller hearth kilns, this can be more than 5 hours (depending on the design). In a rotary kiln maximum residence times of a few hours may be used.

In one embodiment, a batch process can have a residence time of 30 to 120 minutes is used. In another embodiment, a continuous process with a residence time of 15 to 45 minutes is used. For both embodiments it has to be borne in mind that furnace design and carbon mass loading affect the process parameters significantly.

Employing different starting materials, temperatures and oxygen partial pressure may demand an adaptation of the treatment time in order to arrive at a graphite material having the desired parameters as defined herein.

The flow rate of the oxidizing process gas is dependent on the size of the apparatus. The skilled person will be able to adapt the flow rate depending on the identity of the oxidizing process gas, the treatment temperature and the residence time in the furnace in order to arrive at a graphite material of the present invention.

The process parameter "oxidizing process gas to carbon ratio" in kg/kg is defined herein as the ratio of kg of oxidizing process gas to kg of solid carbon. The term "solid carbon" means the elemental carbon as contained in the graphite material to be treated. The oxidizing process gas to carbon ratio strongly depends on the technology used as well as other process parameters like residence time and temperature.

The oxidizing process gas to carbon ratio is usually in the range of 25 kg/kg to 0.005 kg/kg, preferably 15kg /kg to 0.01 kg/kg and more preferably 5 kg/kg to 0.2 kg/kg.

If air is used as the oxidizing process gas, the oxidizing process gas to carbon ratio is usually in the range of 25 kg/kg to 0.02 kg/kg, preferably 15 kg/kg to 0.04 kg/kg and more preferably 10 kg/kg to 0.06 kg/kg.

If oxygen is used as the oxidizing process gas, the oxidizing process gas to carbon ratio is usually in the range of 5 kg/kg to 0.005 kg/kg, preferably 3 kg/kg to 0.01 kg/kg and more preferably 2 kg/kg to 0.02 kg/kg.

If steam is used as the oxidizing process gas, the oxidizing process gas to carbon ratio is usually in the range of 7 kg/kg to 0.005 kg/kg, preferably 5 kg/kg to 0.01 kg/kg and more preferably 3 kg/kg to 0.02 kg/kg.

If ozone is used as the oxidizing process gas, the oxidizing process gas to carbon ratio is usually in the range of 18 kg/kg to 0.015 kg/kg, preferably 15 kg/kg to 0.02 kg/kg and more preferably 10 kg/kg to 0.03 kg/kg.

If CO₂ is used as the oxidizing process gas, the oxidizing process gas to carbon ratio is usually in the range of 20 kg/kg to 0.01 kg/kg, preferably 15 kg/kg to 0.02 kg/kg and more preferably 10 kg/kg to 0.05 kg/kg.

If NO₂ is used as the oxidizing process gas, the oxidizing process gas to carbon ratio is usually in the range of 8 kg/kg to 0.005 kg/kg, preferably 7 kg/kg to 0.01 kg/kg and more preferably 6 kg/kg to 0.02 kg/kg.

If N₂O is used as the oxidizing process gas, the oxidizing process gas to carbon ratio is usually in the range of 16 kg/kg to 0.01 kg/kg, preferably 14 kg/kg to 0.02 kg/kg and more preferably 10 kg/kg to 0.04 kg/kg.

### Further aspects

In a third aspect, the present invention provides for a negative or positive electrode for inclusion in a battery comprising the graphite material of the present invention.

In a preferred embodiment, the electrode comprises the graphite material as conductive additive.

Employing a graphite material having a low oxidability and low electrical resistance in a battery or fuel cell as described herein has the benefit of extending the life of the battery or fuel cell, slowing the degradation of the battery or fuel cell efficiency, and improving safety by reducing the risk of graphite decomposition into gases. In addition, a lower electrical resistance would allow the battery or fuel cell manufacturer to add less conductive additive resulting in higher cell capacity.

In a forth aspect, the present invention provides for a battery comprising the graphite material of the present invention.

In a preferred embodiment, the battery comprises an electrode comprising the graphite material as conductive additive.

The battery may be a Lithium ion battery, a lead acid battery, an alkaline battery or a NiCd battery, preferably a Lithium ion battery.

In a preferred embodiment, the battery is a Lithium ion battery or an alkaline battery and comprises a positive electrode comprising the graphite material as conductive additive.

In a preferred embodiment, the battery is a lead acid battery and comprises a negative electrode comprising the graphite material as conductive additive.

In a fifth aspect, the present invention provides for a fuel cell comprising the graphite material of the present invention.

In a sixth aspect, the present invention provides for a use of the graphite material of the present invention in any one of the following: Lithium ion battery, lead acid battery, alkaline battery, NiCd battery, fuel cell.

In a preferred embodiment, the graphite material is used as a conductive additive.

In a preferred embodiment, the graphite material is used as a conductive additive in the electrode of a Lithium ion battery.

In summary, the subject matter of the present invention as described hereinabove advantageously allows to optimize both the oxidability and electrical resistance in graphite materials.

It is intended that all matter contained in the above description should be interpreted as illustrative and not in a limiting sense. Thus, certain changes may be made in the compositions, uses and methods described above without departing from the scope of the present invention.

The invention will be further described by the following examples which illustrate the preparation of the graphite materials and their corresponding properties, without limiting the invention.

### Examples

### Measurement Methods

### pH Value

1 g of graphite powder is dispersed in 49 ml of distilled water with 2 drops of Ethanol and measured by a pH-meter with a calibrated pH electrode.

### Scott Density

The Scott density is determined by passing the dry carbon powder through the Scott volumeter according to ASTM B 329-98 (2003). The powder is collected in a 1 in 3 vessel (corresponding to 16.39 cm³) and weighed to 0.1 mg accuracy. The ratio of weight and volume corresponds to the Scott density. It is necessary to measure three times and calculate the average value. The bulk density of graphite is calculated from the weight of a 250 ml sample in a calibrated glass cylinder.

### Raman analysis

Raman analyses are performed using LabRAM-ARAMIS Micro-Raman Spectrometer from HORIBA Scientific with a 632.8 nm HeNe LASER. Ratio ID/IG is based on the ratio of intensities of as called band D and band G. These peaks are characteristic for carbon materials, measured at 1350 cm⁻¹ and 1580 cm⁻¹, respectively.

### Particle Size Distribution (PSD) by Laser Diffraction

The presence of particles within a coherent light beam causes diffraction. The dimensions of the diffraction pattern are correlated with the particle size. A parallel beam from a lowpower laser lights up a cell which contains the sample suspended in water. The beam leaving the cell is focused by an optical system. The distribution of the light energy in the focal plane of the system is then analyzed. The electrical signals provided by the optical detectors are transformed into the particle size distribution by means of a calculator. The method yields the proportion of the total volume of particles to a discrete number of size classes forming a volumetric particle size distribution (PSD). The particle size distribution is defined by the values D10, D50 and D90, wherein 10 percent (by volume) of the particle population has a size below the D10 value, 50 percent (by volume) of the particle population has a size below the D50 value and 90 percent (by volume) of the particle population has a size below the D90 value.

The particle size distribution data by laser diffraction quoted herein have been measured with a MALVERN Mastersizer S. For determining the PSD, a small sample of graphite material is mixed with a few drops of wetting agent and a small amount of water. The sample prepared in the described manner is introduced in the storage vessel of the apparatus (MALVERN Mastersizer S) and after 5 minutes of ultrasonic treatment at intensity of 100% and the pump and stirrer speed set at 40%, a measurement is taken.

References: ISO 13320 (2009) / ISO 14887

### Oxygen Concentration/ Oxygen Content

Oxygen concentration in the graphite material is evaluated using the principles of inert gas fusion or solid carrier gas heat extraction. The sample is placed in a graphite crucible and inserted into an electrode furnace. The crucible is maintained between the upper and lower electrodes of an impulse furnace. A high current passes through the crucible after purging with inert gas (He or Ar) creating an increase of the temperature (above 2500°C) . Gases generated in the furnace are released into flowing inert gas stream. The gas stream is then sent to the appropriate infrared (O as CO by NDIR) or thermal conductivity (N and H by TCD) detectors for measurement. Instrument calibrations are performed using known reference materials.

### Electrical resistance

The electrical resistance is measured with the following steps:
Volume resistivity can be measured by the following method:
- preparing a mixture containing 95% electrolytic manganese dioxide and 5 wt% graphite (in case a synthetic or natural graphite was used as graphite starting material) or 3 wt% graphite and 97% electrolytic manganese dioxide (in case a expanded graphite was used as graphite starting material);
- pressing 10g of the obtained mixture at 180 Nm in a die with length of 50mm and width of 12mm to obtain a block;
- measuring the height (H) and the width (W) of the block;
- measuring the block electrical resistance (R) with a 4 points probe;
- calculating the resistivity as H*R/D, where D is the distance of probe measurement pins.

### Specific BET Surface Area

The method is based on the measurement of the absorption isotherm of liquid nitrogen in the range p/p0=0.04-0.26, at 77 K. The nitrogen gas adsorption was performed on a Quantachrome Autosorb-1. Following the procedure proposed by Brunauer, Emmet and Teller (Adsorption of Gases in Multimolecular Layers, J. Am. Chem. Soc., 1938, 60, 309- SI 9), the monolayer capacity can be determined. On the basis of the cross-sectional area of the nitrogen molecule, the monolayer capacity and the weight of sample, the specific surface can then be calculated. The isotherm measured in the pressure range p/pO 0.01-1, at 77 K may be processed with DFT calculation in order to assess the pore size distribution, micro- and mesopore volume and area.

Reference: Ravikovitch, P., Vishnyakov, A., Russo, R., Neimark, A., Langmuir 16 (2000) 2311-2320; Jagiello, J., Thommes, M., Carbon 42 (2004) 1227-1232.

### X-Ray Diffraction

X-Ray Diffraction (XRD) data is collected using a PANalytical X'Pert PRO diffractometer coupled with a PANalytical X'Celerator detector.

The instrument data and measurement parameters of the diffractometer used are listed in Table 1.

Instrument data and measurement parameters for XRD measurements are as listed below:

| Instrument | PANalytical X'Pert PRO |
|---|---|
| X-ray detector | PANalytical X'Celerator |
| X-ray source | Cu-Kα |
| Generator parameters | 45 kV - 40 mA |
| Scan speed | 0.07°/s (for Lc and c/2) |
| | 0.01°/s (for [004]/[110] ratio) |
| Divergence slit | 1° (for Lc and c/2) |
| | 2° (for [004]/[110] ratio) |
| Sample spinning | 60 rpm |

The data is analyzed using the PANalytical X'Pert HighScore Plus software.

### Interlayer Spacing c/2

The interlayer space c/2 is determined by X-ray diffractometry. The angular position of the peak maximum of the [002] and [004] reflection profiles are determined. By applying the Bragg equation, the interlayer spacing is calculated (Klug and Alexander, X-ray diffraction Procedures, John Wiley & Sons Inc., New York, London (1967)). To avoid problems due to the low absorption coefficient of carbon, the instrument alignment and non-planarity of the sample, an internal standard, silicon powder, is added to the sample and the graphite peak position is recalculated on the basis of the position of the silicon peak. The graphite sample is mixed with the silicon standard powder by adding a mixture of polyglycol and ethanol. The obtained slurry is subsequently applied on a glass plate by meaning of a blade with 150 µm spacing and dried.

### Crystallite Size Lc

Crystallite size is determined by analysis of the [002] and [004] diffraction profiles and determining the widths of the peak profiles at the half maximum. The broadening of the peak should be affected by crystallite size as proposed by Scherrer (P. Scherrer, Göttinger Nachrichten 2, 98 (1918)). However, the broadening is also affected by other factors such X-ray absorption, Lorentz polarization and the atomic scattering factor. Several methods have been proposed to take into account these effects by using an internal silicon standard and applying a correction function to the Scherrer equation. For the present invention, the method suggested by Iwashita (N. Iwashita, C. Rae Park, H. Fujimoto, M. Shiraishi and M. Inagaki, Carbon 42, 701-714 (2004)) was used. The sample preparation was the same as for the c/2 determination described above.

### Ash content

The ash content is assessed by gravimetric loss. A low-walled ceramic crucible is heated to 800°C in a muffle furnace and cooled to room temperature in a desiccator. A sample of 10 g of dry powder (accuracy 0.1 mg) is weighed in a low-walled ceramic crucible. The powder is combusted at a temperature of 810°C (at least 8 h) until a constant weight is reached. The residual corresponds to the ash content and is reported as a percentage of the initial weight of the sample.

Reference: ASTM C561 Standard Test Method for Ash in a Graphite Sample.

### Example 1

Different graphite starting materials were treated in a rotary furnace or in a continuous stirred reactor with air or CO₂ at temperatures ranging from 600 to 900°C.

The treatment conditions used to prepare the different graphite materials are described in Table 1.

**Table 1 - Treatment conditions of graphite materials**

| **Material No.** | **Starting Material** | **Oxidizing Process Gas** | **Treatment temperature [°C]** | **Residence Time [Minutes]** | **Graphi te amount/feed** | **Oxidizing Process gas flow/amount** | **Furnace type** | **Oxidizing Process Gas-to-Carbon ratio [kg/kg]** |
|---|---|---|---|---|---|---|---|---|
| Material 1 | Material 24 | Air | 700 | 10-20 | 0.73kg/h | 5 NL/min | Rotary Kiln | 0.53 |
| Material 2 | Material 24 | Air | 800 | 10-20 | 0.31kg/h | 5 NL/min | Rotary Kiln | 1.25 |
| Material 3 | Material 29 | Air | 700 | 10-20 | 0.57kg/h | 5 NL/min | Rotary Kiln | 0.68 |
| Material 4 | Material 23 | Air | 900 | 10-20 | 0.7kg/h | 5 NL/min | Rotary Kiln | 0.55 |
| Material 5 | Material 19 | Air | 900 | 10-20 | 0.53kg/h | 5 NL/min | Rotary Kiln | 0.73 |
| Material 6 | Material 23 | Air | 900 | 10-20 | 0.72kg/h | 5 NL/min | Rotary Kiln | 0.54 |
| Material 7 | Material 22 | Air | 900 | 10-20 | 0.36kg/h | 5 NL/min | Rotary Kiln | 1.08 |
| Material 8 | Material 19 | Air | 600 | 10-20 | 0.46kg/h | 5 NL/min | Rotary Kiln | 0.84 |
| Material 9 | Material 27 | Air | 900 | 60 | 1.5kg | 300L | Continuous Stirred Reactor | 0.26 |
| Material 10 | Material 19 | CO2 | 900 | 10-20 | 0.51kg/h | 5 NL/min | Rotary Kiln | 1.16 |
| Material 11 | Material 24 | Air | 600 | 10-20 | 0.53kg/h | 5 NL/min | Rotary Kiln | 0.73 |
| Material 12 | Material 31 | Air | 700 | 10-20 | 0.64kg/h | 5 NL/min | Rotary Kiln | 0.61 |
| Material 13 | Material 24 | Air | 900 | 10-20 | 0.46kg/h | 5 NL/min | Rotary Kiln | 0.84 |
| Material 14 | Material 22 | Air | 600 | 10-20 | 0.28kg/h | 5 NL/min | Rotary Kiln | 1.39 |
| Material 15 | Material 22 | Air | 900 | 10-20 | 0.25kg/h | 5 NL/min | Rotary Kiln | 1.55 |
| Material 16 | Material 22 | Air | 900 | 60 | 3 kg | 300 L | Continuous Stirred Reactor | 0.13 |

The pH, the Scott density, the Raman D/G intensity ratio as well as a variety of further parameters of the obtained graphite materials were measured (Table 2). Furthermore, the oxidability and the electrical resistance of the materials were determined.

The same set of measurements were conducted for the starting materials prior to treatment as well as further comparative examples. The results are shown in Tables 3 and 4.

As can be seen from comparing the data, the materials having the claimed combination of parameters have an improved balance of low oxidability and low electrical resistance.

**Table 2 - Properties for materials in Table 1**

| **Name** | **pH** | **D10 [µm]** | **D50 [µm]** | **D90 [µm]** | **BET [m²/g]** | **Lc [nm]** | **Ash [wt%]** | **Scott [g/cm³**] | **Raman D/G [Intensi ty ratio]** | **Oxygen - Conc. [wt%]** | **Graphi te Oxidability test [Abs**] | **Elect-Resist, Graphit e 5% [mΩ**·**cm]** | **Elect-Resist, Graphit e 3% [mΩ**·**cm]** |
|---|---|---|---|---|---|---|---|---|---|---|---|---|---|
| Material 1 | 5.9 | 3.4 | 8.5 | 17.0 | 10.0 | 180 | 0.004 | 0.06 | 0.238 | 0.047 | 0.117 | 268 | |
| Material 2 | 5.6 | 3.9 | 9.2 | 18.0 | 11.9 | 178 | 0.01 | 0.06 | 0.281 | 0.053 | 0.132 | 266 | |
| Material 3 | 5.9 | 1.8 | 4.1 | 7.5 | 17.1 | 97 | | 0.07 | 0.277 | | 0.142 | 420 | |
| Material 4 | 5.8 | 3.4 | 8.3 | 16.6 | 12.8 | 200 | 0.02 | 0.06 | 0.321 | 0.055 | 0.152 | 258 | |
| Material 5 | 6.4 | 4.4 | 10.8 | 22.6 | 10.9 | 206 | 0.026 | 0.07 | 0.363 | 0.077 | 0.156 | 259 | |
| Material 6 | 6.2 | 3.6 | 8.7 | 16.3 | 12.6 | 196 | 0.01 | 0.06 | 0.327 | 0.051 | 0.162 | 250 | |
| Material 7 | 6.6 | 3.7 | 8.5 | 16.7 | 11.7 | 190 | 0.01 | 0.06 | 0.357 | 0.064 | 0.164 | 278 | |
| Material 8 | 5.9 | 3.9 | 10.2 | 22.0 | 5.5 | 206 | 0.00 5 | 0.08 | 0.240 | 0.068 | 0.165 | 284 | |
| Material 9 | 9.5 | 12.3 | 43.2 | 116.9 | 22.7 | 42 | 0.03 | 0.04 | 0.299 | 0.26 | 0.168 | | 241 |
| Material 10 | 6.4 | 4.2 | 10.5 | 22.0 | 7.8 | 194 | 0.00 8 | 0.08 | 0.264 | 0.044 | 0.170 | 325 | |
| Material 11 | 5.4 | 3.4 | 8.4 | 16.6 | 8.7 | 183 | 0.01 | 0.07 | 0.283 | 0.090 | 0.170 | 282 | |
| Material 12 | 5.8 | 1.6 | 3.7 | 7.0 | 21.3 | 75 | | 0.09 | 0.307 | | 0.170 | 550 | |
| Material 13 | 6.4 | 3.9 | 9.0 | 17.3 | 11.8 | 194 | 0.02 | 0.05 | 0.389 | 0.075 | 0.171 | 205 | |
| Material 14 | 6.4 | 3.4 | 8.2 | 16.3 | 8.0 | 174 | 0.03 | 0.07 | 0.255 | 0.06 | 0.171 | 249 | |
| Material 15 | 6.3 | 3.9 | 8.9 | 17.2 | 12.8 | 196 | 0.01 | 0.06 | 0.333 | 0.066 | 0.188 | 238 | |
| Material 16 | 6.4 | 3.4 | 8.2 | 16.4 | 9.7 | 180 | 0.04 | 0.07 | 0.271 | 0.044 | 0.168 | 255 | |

**TABLE 3 - Properties of starting materials**

| **Name** | **Graphite Type** | **pH** | **D10 [µm]** | **D50 [µm]** | **D90 [µm]** | **BET [m²/g]** | **Lc [nm]** | **Ash [wt%]** | **Scott [g/cm³]** | **Raman D/G [Intensi ty ratio]** | **Oxygen** - **Conc. [wt%]** | **Graphite oxidability test [Abs**] | **Elect-Resist, Graphite 5% [mΩ**·**cm]** | **Elect-Resist, Graphite 3% [mΩ**·**cm]** |
|---|---|---|---|---|---|---|---|---|---|---|---|---|---|---|
| Material 19 | Synthetic | 5.3 | 4.0 | 10.4 | 22.0 | 8.3 | 190 | 0.047 | 0.090 | 0.334 | 0.078 | 0.200 | 350 | |
| Material 22 | Synthetic | 5.3 | 3.3 | 8.0 | 16.1 | 9.0 | 180 | 0.027 | 0.08 | 0.203 | 0.082 | 0.221 | 316 | |
| Material 23 | Synthetic | 5.4 | 3.2 | 7.9 | 15.7 | 9.8 | 174 | 0.020 | 0.079 | 0.202 | 0.072 | 0.222 | 286 | |
| Material 24 | Synthetic | 5.1 | 3.3 | 8.1 | 15.4 | 9.1 | 179 | 0.020 | 0.066 | 0.270 | 0.12 | 0.222 | 241 | |
| Material 27 | Expanded | 3.9 | 10.8 | 39.2 | 104.1 | 20.6 | 36 | 0.023 | 0.040 | 0.274 | 0.59 | 0.263 | | 244 |
| Material 29 | Synthetic | 4.6 | 1.6 | 3.7 | 6.7 | 15.8 | 96 | 0.009 | 0.089 | 0 293 | | 0.360 | 470 | |
| Material 31 | Synthetic | 4.5 | 1.4 | 3.4 | 6.5 | 20.0 | 74 | 0.014 | 0.093 | 0.335 | | 0.425 | 540 | |

**TABLE 4 Properties of comparative examples**

| **Name** | **Trade Name** - **if available** | **Graphite Type** | **pH** | **D10 [µm]** | **D50 [µm]** | **D90 [µm]** | **BET [m²/g]** | **Lc [nm]** | **Ash [wt%]** | **Scott [g/cm³**] | **Raman D/G [Intensi ty ratio]** | **Oxygen Conc. [wt%]** | **Graphi te Oxidability test [Abs**] | **Elect-Resist, Graphite 5% (mΩ·cm)** |
|---|---|---|---|---|---|---|---|---|---|---|---|---|---|---|
| Material 17 | Nippon Kokuen SP-M9 | Natural | 5.7 | 3.5 | 8.9 | 19.1 | 7.2 | 261 | 0.10 | 0.085 | 0.217 | 0.096 | 0.172 | 265 |
| Material 18 | TIMREX^{®} MX 25 | Synthetic | 5.8 | 4.1 | 10.4 | 20.9 | 7.9 | | 0.03 | 0.069 | 0.204 | 0.110 | 0.177 | 264 |
| Material 20 | | Synthetic | 6.2 | 3.3 | 8.3 | 16.8 | 8.1 | 188 | 0.006 | 0.083 | 0.317 | 0.040 | 0.212 | 377 |
| Material 21 | | Synthetic | 4.9 | 3.5 | 8.5 | 16.6 | 12.8 | 170 | 0.01 | 0.053 | 0.215 | 0.059 | 0.219 | 257 |
| Material 25 | Darsen ED-G500 | Natural | 5.2 | 3.4 | 9.5 | 20.4 | 6.1 | 266 | 0.002 | 0.114 | 0.240 | 0.077 | 0.222 | 496 |
| Material 26 | | Synthetic | 6.4 | 3.4 | 8.2 | 16.4 | 13.6 | 182 | 0.022 | 0.060 | 0.470 | 0.016 | 0.250 | 233 |
| Material 28 | TIMREX^{®} KS 44 | Synthetic | 5.5 | 4.6 | 18.7 | 51.0 | 8.8 | | 0.01 | 0.213 | 0.357 | | 0.282 | 3335 |
| Material 30 | | Synthetic | 9.5 | 2.9 | 6.2 | 10.3 | 27.0 | 66 | 0.45 | 0.084 | 0.356 | 0.470 | 0.395 | 337 |
| Material 32 | | synth-Coated | 6.5 | 4.2 | 10.4 | 20.9 | 5.3 | 223 | 0.011 | 0.081 | 0.423 | 0.110 | 1.550 | not measurable |
| Material 33 | TIMREX^{®} SLP50 | Synthetic | 4.9 | 10.5 | 23.7 | 46.7 | 5.7 | 330 | 0.03 | 0.400 | 0.495 | | 0.301 | 47763 |
| Material 34 | TIMREX^{®} SFG15 | Synthetic | 5.0 | 3.3 | 8.3 | 16.4 | 8.5 | 189 | 0.05 | 0.081 | 0.254 | | 0.249 | 461 |

## Claims

1. A graphite material having the following properties:
a) a pH of at least 5.4, measured as described herein;
b) Scott density less than or equal to 0.11 g/cm³, measured as described herein; and
c) a Raman D/G intensity ratio of 0.220 to 0.420 when measured with a laser having excitation wavelength of 632.8 nm.

2. The graphite material according to claim 1 wherein the pH is 5.4 to 12, preferably 5.4 to 11, or 5.4 to 10.

3. The graphite material according to claims 1 or 2 wherein the Scott density is less than or equal to 0.10 g/cm³, preferably less than or equal to 0.09 g/cm³.

4. The graphite material according to any of claims 1 to 3 wherein the Raman D/G intensity ratio is 0.23 to 0.40.

5. The graphite material according to any of claims 1 to 4 further having at least one of the following properties:
d) a D90 of at least 11.0 µm as measured by Laser Diffraction;
e) an oxygen concentration of at least 0.042 wt% as measured by elemental analysis, based on the total weight of the graphite material.

6. The graphite material according to any of claims 1 to 5 wherein the D90 is at least 5 µm measured as described herein.

7. The graphite material according to any of claims 1 to 6 wherein the oxygen concentration is up to 1.0 wt% or up to 0.9 wt% or up to 0.7 wt% or up to 0.6 wt% or up to 0.5 wt%.

8. The graphite material according to any of claims 1 to 7 further having a BET specific surface area of at least 5.5 m²/g, measured as described herein.

9. The graphite material according to any of claims 1 to 8 further having
i) an oxidability less than or equal to 0.19, measured as described herein; and
ii) an electrical resistance, less than or equal to 600 mΩ·cm, preferably less than or equal to 400 mΩ·cm, and most preferably less than or equal to 285 mΩ·cm, measured as described herein.

10. The graphite material according to claim 9 wherein:
i) the oxidability is less than or equal to 0.18, or 0.17, or 0.16, or 0.15; and/or
ii) the electrical resistance is less than or equal to 260 mΩ·cm, or is less than or equal to 255 mΩ·cm, or is less than or equal to 250 mΩ·cm.

11. A process for producing a graphite material wherein
a) a graphite starting material is subjected to a surface modification process comprising heating to a temperature in the range of 300 to 1700°C in the presence of an oxidizing process gas such as but not limited to oxygen, air, oxygen enriched air, carbon dioxide, ozone, steam, NOₓ (including but not limited to NO₂, NO, N₂O) or any combination thereof; and
b) a graphite material as defined in any one of claims 1 to 10 is obtained.

12. The process of claim 11, wherein the oxidizing process gas to carbon ratio in the graphite is in the range of 25 kg/kg to 0.005 kg/kg.

13. The process of claims 11 or 12, in which step a) comprises heating to a temperature in the range of 500 to 1400°C, preferably 700 to 1100°C.

14. A negative or positive electrode for inclusion in a battery comprising the graphite material as defined in any one of claims 1 to 10, preferably as a conductive additive.

15. A battery comprising the graphite material as defined in any one of claims 1 to 10, wherein the battery is preferably a lithium ion battery, a lead acid battery, an alkaline battery or a NiCd battery.

16. A fuel cell comprising the graphite material as defined in any one of claims 1 to 10.

17. Use of the graphite material of any of claims 1 to 10 in any one of the following: Lithium ion battery, Lead Acid battery, Alkaline battery, NiCd Battery, Fuel Cell.
